# EUROPÄISCHE PATENTSCHRIFT

(11) **EP 3 197 679 B1**
(45) Veröffentlichungstag und Bekanntmachung des Hinweises auf die Patenterteilung: **06.11.2019**
(21) Anmeldenummer: 15777626.1
(22) Anmeldetag: 22.09.2015
(51) Int. Cl.: B32B 37/04, B32B 37/06, B32B 5/18, E04B 1/80, F16L 59/065

(54) **VERFAHREN ZUR HERSTELLUNG EINES VERBUNDELEMENTS FÜR VAKUUMDÄMMELEMENTE**
METHOD FOR MANUFACTURING A COMPOSITE ELEMENT FOR VACUUM INSULATION ELEMENTS
PROCÉDÉ DE FABRICATION D'UN ÉLÉMENT COMPOSITE POUR ÉLÉMENTS ISOLANTS SOUS VIDE

(30) Priorität: 25.09.2014 EP 14186310
(43) Veröffentlichungstag der Anmeldung: 02.08.2017
(73) Patentinhaber: BASF SE, 67056 Ludwigshafen (DE)
(72) Erfinder: WIEGMANN, Werner, 32369 Rahden-Wehe (DE); FRICKE, Marc, 49090 Osnabrück (DE); KROGMANN, Jörg, 49393 Lohne (DE)
(74) Vertreter: BASF IP Association
(86) Internationale Anmeldenummer: PCT/EP2015/071670
(87) Internationale Veröffentlichungsnummer: WO 2016/046172

(56) Entgegenhaltungen:
- WO-A1-2012/119892
- CA-A1- 2 693 186

## Beschreibung

Die vorliegende Erfindung betrifft ein Verfahren zur Herstellung eines Verbundelements enthaltend einen ein- oder mehrteiligen Kern und eine Umhüllung, die kraftschlüssig miteinander verbunden sind, mindestens umfassend das Bereitstellen eines ein- oder mehrteiligen Kerns aus einem evakuierbaren organischen Material; das zumindest teilweises Umhüllen des Kerns mit einer Umhüllung unter Erhalt eines Verbundelement-Vorläufers, wobei die am Kern anliegende Oberfläche der Umhüllung aus einem thermoplastischen Material besteht; und das Behandeln des Verbundelement-Vorläufers für eine Dauer, die zu einem zumindest teilweisen Erweichen des evakuierbaren organischen Materials und der am Kern anliegenden Oberfläche der Umhüllung führt.

Verbundelemente aus einem Kern und einer Umhüllung sind als Dämmelemente grundsätzlich aus dem Stand der Technik bekannt. Als Dämmmaterial werden insbesondere evakuierte Verbundsysteme eingesetzt, sogenannte Vakuumisolationspaneele.

Verbundelemente, wie Vakuumisolationspaneele, werden in zunehmendem Maße zur Wärmedämmung eingesetzt. Sie finden unter anderem Anwendung für Kühlgerätegehäuse, Behälter für Kühlfahrzeuge, Kühlboxen, Kühlzellen oder Fernwärmerohre. Aufgrund ihrer geringeren Wärmeleitfähigkeit bieten sie Vorteile gegenüber üblichen Dämmstoffen. So liegt das Energieeinsparpotential gegenüber geschlossenzelligen Polyurethan-Hartschaumstoffen üblicherweise bei einem Faktor 3 bis 7. Solche Vakuumisolationspaneele bestehen in der Regel aus einem wärmedämmenden Kernmaterial, beispielsweise aus gepresster oder loser pyrogener Kieselsäure, Fällungskieselsäure, offenzelligem Polyurethan (PUR)-Hartschaum, offenzelligem extrudierten Polystyrolschaum, Kieselgelen, Glasfasern, Kunststoffschüttungen, gepresstem Mahlgut aus PUR-Hartschaum bzw. -Halbhartschaum, Perlite, welches in eine gasdichte Folie verpackt, evakuiert und luftdicht eingeschweißt wird. Das Vakuum ist üblicherweise kleiner als 100 mbar. Bei diesem Vakuum kann eine Wärmeleitfähigkeit der Paneele je nach Struktur und Porengröße des Kernmaterials von unter 10 mW/m*K erreicht werden.

Als Kernmaterialien werden insbesondere Pulverplatten aus pyrogener Kieselsäure und Glasfaserplatten eingesetzt. Ebenfalls eingesetzt werden Hartschäume und Xerogele, die eine gewisse Stabilität aufweisen und an die jeweils benötigte Form angepasst werden können. Neben den häufig eingesetzten Polyurethan- oder Polyisocyanuratschäumen werden auch Aerogele eingesetzt, die auch in nicht evakuiertem Zustand eine gute Wärmedämmwirkung aufweisen.

Neben der mechanischen Stabilität der Verbundsysteme ist ein Problem die Stabilität der Umhüllung. Sofern es zu mechanischen Beschädigungen der Umhüllung kommt, ist das Vakuum nicht länger vorhanden. Das Verbundelement verliert somit zum einen an mechanischer Stabilität, insbesondere bei Kernmaterialien aus pyrogener Kieselsäure und Glasfasern, zum anderen sinkt die Wärmedämmleistung.

Um diesem Problem zu begegnen, werden beispielsweise Klebschichten beim Aufbau der Verbundelemente eingesetzt. Dies führt zu einem Verbund der Folie mit dem Schaum, so dass es bei kleineren Beschädigungen der Umhüllung nicht über das gesamte Verbundelement zu einem Verlust des Vakuums kommt.

In WO 2012/119892 A1 werden Verbundelement enthaltend einen Kern aus einem Schaumstoff oder porösem Material, vorzugsweise einem Schaumstoff, eine auf dem Kern angebrachte Deckschicht, und eine von der Deckschicht verschiedene Folie aus einem thermoplastischen Kunststoff offenbart. Die Verwendung derartiger Verbundelemente für die Herstellung von Kühlgeräten wird ebenfalls offenbart.

Beispielsweise auch in DE 100 59 453 wird ein Verbundelement aus Kernmaterial und Folie in Vakuumisolationspaneelen beschrieben. DE 100 59 453 offenbart die Verklebung eines offenzelligen Hartschaums mit der Folie unter Verwendung eines Klebers.

Die Verwendung von Klebern oder zusätzlichen Deckschichten führt aber zu einem aufwändigeren Herstellungsverfahren. Ein einfaches Umhüllen des zuvor hergestellten Kernmaterials und anschließendes Evakuieren/Verschweißen ist dabei nicht möglich. Ein kostenintensiver schichtweiser Aufbau ist nötig.

Eine der vorliegenden Erfindung zugrunde liegende Aufgabe war es somit, stabile Verbundelemente und vereinfachte Verfahren zu deren Herstellung bereitzustellen. Eine weitere der vorliegenden Erfindung zugrunde liegende Aufgabe war es, gut dämmende Verbundelemente und vereinfachte Verfahren zu deren Herstellung bereitzustellen.

Erfindungsgemäß wird diese Aufgabe gelöst durch ein Verfahren zur Herstellung eines Verbundelements enthaltend einen ein- oder mehrteiligen Kern und eine Umhüllung, die kraftschlüssig miteinander verbunden sind, mindestens umfassend die folgenden Schritte:
(i) Bereitstellen eines ein- oder mehrteiligen Kerns aus einem evakuierbaren organischen Material;
(ii) zumindest teilweises Umhüllen des Kerns mit einer Umhüllung unter Erhalt eines Verbundelement-Vorläufers, wobei die am Kern anliegende Oberfläche der Umhüllung aus einem thermoplastischen Material besteht;
(iii) Behandeln des Verbundelement-Vorläufers für eine Dauer, die zu einem zumindest teilweisen Erweichen des evakuierbaren organischen Materials und der am Kern anliegenden Oberfläche der Umhüllung führt.

Überraschend wurde gefunden, dass es mit dem erfindungsgemäßen Verfahren möglich ist, eine kraftschlüssige Verbindung zwischen der Umhüllung und dem Kern des Verbundelements zu erreichen. Damit ist es möglich, Verbundelemente in einfacher Weise herzustellen, die durch die Verbindung der Umhüllung mit dem Kern eine erhöhte mechanische Stabilität aufweisen und insbesondere für den Fall, dass das Verbundelement evakuiert und die Umhüllung geschlossen wird, ein stabileres Vakuum ermöglichen. Diese Verbundelemente zeichnen sich dadurch aus, dass im Fall einer Beschädigung keine Delaminierung der Umhüllung vom Kern erfolgt und somit eine strukturelle Integrität aufrechterhalten wird.

Unter einem Verbundelement-Vorläufer wird im Rahmen der vorliegenden Erfindung eine Kombination mindestens umfassend den ein- oder mehrteiligen Kern und die Umhüllung verstanden, wobei der Kern und die Umhüllung nicht dauerhaft miteinander verbunden sind.

Gemäß dem erfindungsgemäßen Verfahren wird zunächst ein- oder mehrteiliger Kern aus einem evakuierbaren organischen Material bereitgestellt, der dann gemäß Schritt (ii) zumindest teilweise mit einer Umhüllung unter Erhalt eines Verbundelement-Vorläufers umhüllt wird. Erfindungsgemäß ist es dabei möglich, dass nur eine Oberfläche des Kerns bedeckt wird. Ebenso ist es aber auch möglich, dass der Kern im Wesentlichen vollständig umhüllt ist, wobei die Umhüllung des gemäß Schritt (ii) erhaltenen Verbundelement-Vorläufers nicht verschlossen ist. Erfindungsgemäß besteht die am Kern anliegende Oberfläche der Umhüllung aus einem thermoplastischen Material. Dabei ist es im Rahmen der vorliegenden Erfindung möglich, dass die Umhüllung vollständig aus einem thermoplastischen Material besteht. Ebenso ist es jedoch im Rahmen der vorliegenden Erfindung möglich, dass die Umhüllung aus mehreren Schichten besteht und nur die Schicht, die die am Kern anliegende Oberfläche der Umhüllung bildet, aus einem thermoplastischen Material besteht.

Erfindungsgemäß hat die Schicht, die die am Kern anliegende Oberfläche der Umhüllung bildet, eine Dicke von mindestens 30 µm, bevorzugt eine Dicke von mindestens 40 µm, weiter bevorzugt eine Dicke von mindestens 50 µm.

Vorzugsweise weist der ein- oder mehrteilige Kern eine oder mehrere im Wesentlichen ebene Oberflächen auf, so dass die Umhüllung eng am Kern anliegt.

Der gemäß Schritt (ii) erhaltene Verbundelement-Vorläufer wird dann gemäß Schritt (iii) derart behandelt, dass die am Kern anliegenden Oberfläche der Umhüllung und das evakuierbare organische Material zumindest teilweise erweichen. Dabei bildet sich erfindungsgemäß eine Verbindung zwischen der am Kern anliegenden Oberfläche der Umhüllung und dem Kernmaterial aus. Nach der Behandlung wird ein Verbundelement mit einer kraftschlüssigen Verbindung der Umhüllung und des ein- oder mehrteiligen Kerns erhalten.

Prinzipiell sind im Rahmen der vorliegenden Erfindung alle Behandlungen möglich, die zu einem zumindest teilweisen Erweichen des evakuierbaren organischen Materials und der am Kern anliegenden Oberfläche der Umhüllung führen. Geeignet sind beispielsweise Behandlungen, die zu einer Erwärmung und einem damit verbundenen Erweichen des evakuierbaren organischen Materials und der am Kern anliegenden Oberfläche der Umhüllung führen.

Erfindungsgemäß besteht die am Kern anliegende Oberfläche der Umhüllung aus einem thermoplastischen Material. Gemäß einer weiter bevorzugten Ausführungsform der vorliegenden Erfindung besteht die Umhüllung aus einer Folie, insbesondere aus einer Folie, bei der zumindest eine Oberfläche der Folie aus einem thermoplastischen Material besteht.

Erfindungsgemäß liegt die Oberfläche der Umhüllung, die aus einem thermoplastischen Material besteht, am Kern an. Somit werden im Rahmen der vorliegenden Erfindung keine weiteren Schichten oder Kleber zwischen dem Kern und der Umhüllung eingesetzt.

Dabei sind im Rahmen der vorliegenden Erfindung für das Erwärmen prinzipiell alle dem Fachmann bekannten geeigneten Wärmequellen einsetzbar, insbesondere solche, die zu einem gleichmäßigen Erwärmen der Umhüllung und des Kerns führen. Vorzugsweise kann die Wärmeeinwirkung über eine Wärmeplatte, Wärmelampe (IR-Strahler) oder Ultraschall erfolgen.

Demgemäß betrifft die vorliegende Erfindung gemäß einer weiteren Ausführungsform auch ein Verfahren wie zuvor beschrieben, wobei die Behandlung eine Wärmebehandlung mittels Aufheizen, Infrarot oder Ultraschall umfasst.

Vorzugsweise liegt die Umhüllung eng am Kern an, um eine gleichmäßige Verbindung zwischen Kern und Umhüllung zu gewährleisten. Dabei ist es im Rahmen der vorliegenden Erfindung möglich, dass die Umhüllung durch geeignete Maßnahmen in Kontakt mit dem Kern gebracht wird, beispielsweise durch Spannen der Umhüllung oder Anpressen der Umhüllung. Geeignete Vorrichtungen zum Anpressen oder Spannen der Umhüllung sind dem Fachmann an sich bekannt. Sofern der Kern eine im Wesentlichen ebene Oberfläche aufweist, kann ein Anpressen beispielsweise mit einer Platte erfolgen.

Demgemäß betrifft die vorliegende Erfindung gemäß einer weiteren Ausführungsform auch ein Verfahren wie zuvor beschrieben, wobei die Behandlung gemäß Schritt (iii) eine Wärmebehandlung und das Anpressen der Umhüllung an den Kern umfasst.

Der Druck beim Anpressen wird dabei erfindungsgemäß auf das eingesetzte Material abgestimmt. Geeignet sind beispielsweise Drücke im Bereich von 1 bis 5 bar, beispielsweise 1,25 bar bis 4 bar, bevorzugt 1,5 bar bis 3 bar, weiter bevorzugt 1,75 bar bis 2 bar.

Erfindungsgemäß ist es auch möglich, dass mehrere Seiten bzw. Oberflächen des Kerns mir der Umhüllung kraftschlüssig verbunden werden. So ist es beispielsweise möglich, dass der Kern vollständig von der Umhüllung bedeckt wird und gemäß dem erfindungsgemäßen Verfahren eine kraftschlüssige Verbindung zwischen Kern und Umhüllung erreicht wird.

Erfindungsgemäß kann das Verfahren weitere Schritte aufweisen. Dabei ist es abhängig von dem als Kern eingesetzten evakuierbaren organischen Material beispielsweise vorteilhaft, wenn das Kernmaterial evakuiert wird, um eine verbesserte Wärmedämmleistung zu erreichen.

Gemäß einer möglichen Ausgestaltung des erfindungsgemäßen Verfahrens kann das Verfahren beispielsweise ein Evakuieren des evakuierbaren organischen Materials umfassen. Vorteilhafterweise wird dazu zunächst der ein- oder mehrteilige Kern im Wesentlichen vollständig von der Umhüllung umschlossen, die dann evakuiert werden kann. Dazu ist es beispielsweise vorteilhaft, wenn die Umhüllung an zwei oder mehreren Seiten geschlossen ist und nur eine offene Seite aufweist, die dann zum Anlegen des Vakuums genutzt werden kann. Sofern der ein- oder mehrteilige Kern beispielsweise plattenförmig ausgestaltet ist, kann die Umhüllung in Form einer an drei Seiten geschlossenen doppellagigen Hülle ausgestaltet sein, in die durch die offene Seite der ein- oder mehrteilige Kern eingebracht wird. Das erfindungsgemäße Verfahren kann somit beispielsweise nach Schritt (ii) und vor Schritt (iii) einen Schritt des Evakuierens und ein anschließendes Verschließen der Umhüllung umfassen.

Demgemäß betrifft die vorliegende Erfindung gemäß einer weiteren Ausführungsform auch ein Verfahren wie zuvor beschrieben, wobei das Verfahren nach Schritt (ii) und vor Schritt (iii) die Schritte (a) und (b) umfasst:
(a) Evakuieren des Verbundelement-Vorläufers;
(b) Verschließen der Umhüllung unter Erhalt eines evakuierten Verbundelement-Vorläufers.

Gemäß einer Ausführungsform betrifft die vorliegende Erfindung damit ein Verfahren zur Herstellung eines Verbundelements enthaltend einen ein- oder mehrteiligen Kern und eine Umhüllung, die kraftschlüssig miteinander verbunden sind, mindestens umfassend die folgenden Schritte:
(i) Bereitstellen eines ein- oder mehrteiligen Kerns aus einem evakuierbaren organischen Material;
(ii) zumindest teilweises Umhüllen des Kerns mit einer Umhüllung unter Erhalt eines Verbundelement-Vorläufers, wobei die am Kern anliegende Oberfläche der Umhüllung aus einem thermoplastischen Material besteht;
   (a) Evakuieren des Verbundelement-Vorläufers;
   (b) Verschließen der Umhüllung unter Erhalt eines evakuierten Verbundelement-Vorläufers;
(iii) Behandeln des Verbundelement-Vorläufers für eine Dauer, die zu einem zumindest teilweisen Erweichen des evakuierbaren organischen Materials und der am Kern anliegenden Oberfläche der Umhüllung führt.

Die Dauer der Behandlung gemäß Schritt (iii) kann dabei in weiten Bereichen variieren, solange gewährleistet ist, dass das evakuierbare organische Material und die am Kern anliegenden Oberfläche der Umhüllung zumindest teilweise erweichen. Geeignet ist beispielsweise eine Behandlung für eine Dauer im Bereich von 2 Sekunden bis 30 Minuten, bevorzugt im Bereich von 10 Sekunden bis 10 Minuten, weiter bevorzugt von 30 Sekunden bis 1 Minute.

Demgemäß betrifft die vorliegende Erfindung gemäß einer weiteren Ausführungsform auch ein Verfahren wie zuvor beschrieben, wobei die Behandlung für eine Dauer im Bereich von 2 Sekunden bis 30 Minuten ausgeführt wird.

Prinzipiell kann das erfindungsgemäß erhaltene Verbundelement eine beliebige Form aufweisen. Dabei ist die Form im Wesentlichen durch die Form des Kerns vorgegeben. Gemäß einer bevorzugten Ausführungsform betrifft die vorliegende Erfindung ein Verfahren zur Herstellung von plattenförmigen Verbundelementen. Demgemäß ist der Kern vorzugsweise plattenförmig ausgestaltet.

Demgemäß betrifft die vorliegende Erfindung gemäß einer weiteren Ausführungsform auch ein Verfahren wie zuvor beschrieben, wobei der ein- oder mehrteilige Kern plattenförmig ausgestaltet ist.

Üblicherweise kann ein als Kern eingesetzter Formkörper beispielsweise eine Dicke im Bereich von 5 bis 40 mm aufweisen.

Der Kern besteht im Rahmen der vorliegenden Erfindung aus einem evakuierbaren organischen Material. Geeignet sind insbesondere Materialien, die üblicherweise als Wärmedämmmaterialien eingesetzt werden, d.h. Materialien, die bereits als solches eine gute Wärmedämmleistung aufweisen. Geeignete Materialien sind beispielsweise organische Hartschäume oder organische Xerogele und organischen Aerogele. Evakuierbare organische Hartschäume sind beispielsweise solche auf Basis von Polyurethanen oder Polyisocyanuraten. Bevorzugt sind erfindungsgemäß als organischer Hartschaum offenzellige organische Hartschäume, insbesondere solche auf Basis von Polyurethanen oder Polyisocyanuraten.

Beispielsweise können auch organische Aerogele und organischen Xerogele eingesetzt werden, die eine im Wesentlichen geschlossene Oberfläche, d.h. eine Haut, aufweisen. Derartige Materialien lassen sich gemäß dem erfindungsgemäßen Verfahren gut verarbeiten, so dass es zu einer guten Verbindung der Umhüllung mit dem Kern kommt.

Demgemäß betrifft die vorliegende Erfindung gemäß einer weiteren Ausführungsform auch ein Verfahren wie zuvor beschrieben, wobei das evakuierbare organische Material ausgewählt ist aus der Gruppe bestehend aus organischen Aerogelen, organischen Xerogelen und organischen Hartschäumen. Weiter bevorzugt ist das evakuierbare organische Material ausgewählt aus der Gruppe bestehend aus organischen Aerogelen, organischen Xerogelen und offenzelligen Polyurethan-Hartschäumen.

Gemäß einer weiteren Ausführungsform der vorliegenden Erfindung ist das evakuierbare organische Material ein organisches Xerogel.

Erfindungsgemäß geeignete organische Aerogele, organische Xerogele und organische Hartschäume sind insbesondere solche, die als Dämmmaterial eingesetzt werden können. Geeignete Materialien sind dem Fachmann prinzipiell bekannt. Geeignet sind beispielsweise solche Aerogele, die in WO 2012/059388 A1 und WO 2014/048778 A1 offenbart werden. Besonders geeignete organische Xerogele sind beispielsweise in WO 2011/069959 A2 oder WO 2012/059388 A1 offenbart. Geeignete organische Hartschäume werden beispielsweise in EP 2072548 A2 offenbart.

Erfindungsgemäß besteht die am Kern anliegende Oberfläche der Umhüllung aus einem thermoplastischen Material. Gemäß einer weiter bevorzugten Ausführungsform der vorliegenden Erfindung ist die Umhüllung eine Folie.

Als Umhüllung können insbesondere übliche Umhüllungen für Vakuumverbundelemente eingesetzt werden. Vorzugsweise hat die Umhüllung einen mehrschichtigen Aufbau, der zum einen gewährleistet, dass eine kraftschlüssige Verbindung der Umhüllung mit dem Kernmaterial möglich ist, zum anderen geeignet ist, um ein dauerhaftes Vakuum zu ermöglichen. Im Rahmen der vorliegenden Erfindung ist es somit bevorzugt, dass die Umhüllung diffusionsdicht ist.

Im Rahmen der vorliegenden Erfindung können diffusionsdichte Umhüllungen eingesetzt werden, sofern gewährleistet ist, dass mindestens eine der Oberflächen der Umhüllung aus einem thermoplastischen Material besteht und diese Oberfläche in Kontakt mit dem Kern gebracht wird.

Gemäß einer weiteren Ausführungsform ist die Umhüllung nicht diffusionsdicht. Derartige Umhüllung ist insbesondere für Anwendungen geeignet, bei denen keine hohe Wärmedämmwirkung erforderlich ist oder für Verbundelemente, die durch den Kern eine ausreichende Wärmedämmwirkung aufweisen, beispielsweise, wenn ein Aerogel als Kernmaterial eingesetzt wird.

Als Umhüllung geeignete Folien sind beispielsweise unter dem Begriff "Barrierefolien" bekannt. Erfindungsgemäß besonders geeignete Folien sind insbesondere luftundurchlässig oder gasdiffusionsdicht. Gemäß einer weiteren Ausführungsform weist die Umhüllung eine Gasdurchlässigkeit von weniger als 1 cm³/(m²d) und/oder eine Wasserdampfdurchlässigkeit von weniger als 1 g/(m²d) auf, wobei die Volumenangaben auf 1 bar Druck und Raumtemperatur bezogen sind. Dabei wird soweit nicht anders angegeben die Gasdurchlässigkeit bestimmt gemäß DIN 53380.

Weiter betrifft die vorliegende Erfindung gemäß einer weiteren Ausführungsform auch ein Verfahren wie zuvor beschrieben, wobei die Umhüllung diffusionsdicht ist. Erfindungsgemäß weist die Umhüllung gemäß einer weiteren Ausführungsform eine Gasdurchlässigkeit von weniger als 1 cm³/(m²d), bestimmt gemäß DIN 53380, auf.

Gemäß einer weiteren Ausführungsform der vorliegenden Erfindung weist die Umhüllung eine Wasserdampfdurchlässigkeit von weniger als 1 g/(m²d), bestimmt gemäß DIN 53380, auf.

Schließlich betrifft die vorliegende Erfindung gemäß einer weiteren Ausführungsform ein Verfahren wie zuvor beschrieben, wobei die Umhüllung eine Gasdurchlässigkeit von weniger als 1 cm³/(m²d), bestimmt gemäß DIN 53380, und eine Wasserdampfdurchlässigkeit von weniger als 1 g/(m²d), bestimmt gemäß DIN 53380, aufweist.

Weiter betrifft die vorliegende Erfindung gemäß einer weiteren Ausführungsform auch ein Verfahren wie zuvor beschrieben, wobei die Umhüllung einen mehrschichtigen Aufbau hat.

Erfindungsgemäß ist es auch möglich, dass die Umhüllung aus mehreren Lagen oder auch Schichten besteht, von denen bevorzugt mindestens eine diffusionsdicht ist. Die Umhüllung kann beispielsweise zweilagig oder dreilagig sein. Erfindungsgemäß kann die Umhüllung beispielsweise eine mehrlagige Folie sein.

Geeignet sind als Umhüllung erfindungsgemäß beispielsweise Metallfolien oder auch Kunststofffolien. Im Rahmen der vorliegenden Erfindung wird unter einer Metallfolie eine mehrschichtige Folie verstanden, die eine Metallschicht und mindestens eine Schicht aus einem thermoplastischen Material aufweist. Als Kunststofffolien können verschiedenste Folien eingesetzt werden, sofern gewährleistet ist, dass mindestens eine der Oberflächen der Folie aus einem thermoplastischen Material besteht und diese Oberfläche in Kontakt mit dem Kern gebracht wird.

Gemäß einer Ausführungsform betrifft die vorliegende Erfindung demgemäß ein Verfahren zur Herstellung eines Verbundelements wie zuvor beschrieben, wobei die Umhüllung eine Kunststofffolie oder eine Metallfolie umfasst. Gemäß einer weiteren Ausführungsform betrifft die vorliegende Erfindung auch ein Verfahren zur Herstellung eines Verbundelements wie zuvor beschrieben, wobei die Umhüllung eine diffusionsdichte Kunststofffolie oder eine Metallfolie umfasst. Geeignete Materialien sind beispielsweise Polyethylen oder Polyethylenterephthalat.

Erfindungsgemäß weist die Umhüllung zumindest eine Oberfläche auf, die aus einem thermoplastischen Material besteht, beispielsweise aus Polyethylen oder Polypropylen. Im Rahmen der vorliegenden Erfindung liegt die Oberfläche, die aus einem thermoplastischen Material besteht, am Kern an.

Demgemäß betrifft die vorliegende Erfindung gemäß einer weiteren Ausführungsform auch ein Verfahren wie zuvor beschrieben, wobei die am Kern anliegende Oberfläche der Umhüllung aus einem thermoplastischen Material ausgewählt aus der Gruppe bestehend aus Polyethylen und Polypropylen besteht. Vorzugsweise besteht die am Kern anliegende Oberfläche der Umhüllung aus Polyethylen.

Eine erfindungsgemäß bevorzugte Umhüllung besteht beispielsweise aus mehreren Schichten, beispielsweise aus einer Polyesterlage und einer Polyethylenlage, wobei eine oder mehrere Schichten beispielsweise auch mit einer metallischen Schicht bedampft sein können. Geeignet sind beispielsweise mit Aluminium bedampfte Schichten. Erfindungsgemäß besteht mindestens eine Oberfläche der Umhüllung aus einem thermoplastischen Material. Demgemäß ist vorzugsweise die Oberflächen-Schicht eine Polyethylenschicht. Dabei kann die Umhüllung auch aus drei oder mehr Schichten bestehen, wobei beispielsweise auch mehrere Polyesterschichten kombiniert werden können, beispielsweise eine Polyesterschicht, die mit einem Metall bedampft wurde, und eine unbedampfte Polyesterschicht. Geeignet sind beispielsweise Polyterephthalat-Schichten.

Erfindungsgemäß als Umhüllung geeignet sind beispielsweise handelsübliche Barrierefolien wie die unter der Bezeichnung V08621 von der Firma Hanita Coatings RCA Ltd erhältliche Folie. Diese besteht beispielsweise aus drei Lagen mit Aluminium metallisiertem Polyterephthalatfilm und einer Siegelschicht aus LLDPE.

Erfindungsgemäß kann die Umhüllung auch weitere Schichten, beispielsweise auch Polyamid-Schichten, Ethylen-vinylalkohol-Copolymer-Schichten oder Kombinationen beider Schichten enthalten.

Erfindungsgemäß ist es möglich, dass die Umhüllung durch eine Kombination einzelner Folien aufgebaut wird. Als Umhüllung geeignete Folien und Verfahren zu deren Herstellung sind dem Fachmann an sich bekannt.

Die erfindungsgemäß erhaltenen Verbundelemente weisen eine kraftschlüssige Verbindung zwischen der Umhüllung und dem Kernmaterial auf. Dabei ist es im Rahmen der vorliegenden Erfindung möglich, dass der Kern nur teilweise von der Umhüllung bedeckt ist. In diesem Fall ist der Kern nicht evakuiert und die Umhüllung dient im Wesentlichen der Verbesserung der mechanischen Stabilität. Ebenso ist es jedoch möglich, dass der Kern vollständig von der Umhüllung umschlossen ist und das Verbundelement evakuiert ist.

Die kraftschlüssige Verbindung der Umhüllung mit dem Kern wird analog zu DIN EN ISO 5271 gemessen. Erfindungsgemäß ist die am Kern anliegende Oberfläche der Umhüllung in direktem Kontakt mit dem evakuierbaren organischen Material und haftet an dem evakuierbaren organischen Material mit einer Kraft im Bereich von 100 bis 300 N, bestimmt analog zu DIN EN ISO 5271, an.

Gemäß einem weiteren Aspekt betrifft die vorliegende Offenbarung auch die Verbundelemente als solche sowie die Verwendung als Wärmedämmmaterial.

Demgemäß betrifft die vorliegende Offenbarung gemäß einem weiteren Aspekt auch ein Verbundelement erhältlich oder erhalten nach einem Verfahren wie zuvor beschrieben.

Insbesondere betrifft die vorliegende Erfindung gemäß einem weiteren Aspekt auch ein Verbundelement umfassend einen ein- oder mehrteiligen Kern aus einem evakuierbaren organischen Material und mindestens eine geschlossene Umhüllung, die den Kern umschließt, wobei die am Kern anliegende Oberfläche der Umhüllung in direktem Kontakt mit dem evakuierbaren organischen Material steht und an dem evakuierbaren organischen Material mit einer Kraft im Bereich von 100 bis 300 N, bestimmt analog zu DIN EN ISO 5271, anhaftet und innerhalb der geschlossenen Umhüllung ein Druck im Bereich von 0,01 mbar bis 200 mbar vorliegt.

Im Rahmen der vorliegenden Erfindung weist das Verbundelement zwischen dem Kern un der Umhüllung keine weiteren Schichten auf, insbesondere keine Deckschichten oder haftvermittelnden Schichten.

Die erfindungsgemäß erhaltenen Verbundelemente sind mechanisch stabil und weisen eine gute Wärmedämmung auf. Durch die kraftschlüssige Verbindung der Umhüllung mit dem Kern bleibt die Wärmedämmung auch bestehen, wenn es zu Beschädigungen der Umhüllung kommt. Damit eigenen sich die erfindungsgemäßen Verbundelemente insbesondere für die Verwendung als Vakuumisolationspaneel oder Wärmedämmmaterial.

Demgemäß betrifft die vorliegende Offenbarung gemäß einem weiteren Aspekt auch die Verwendung eines Verbundelements erhältlich oder erhalten nach einem Verfahren wie zuvor beschrieben oder eines Verbundelements wie zuvor beschrieben als Vakuumisolationspaneel.

Gemäß einem weiteren Aspekt betrifft die vorliegende Offenbarung auch die Verwendung eines Verbundelements erhältlich oder erhalten nach einem Verfahren wie zuvor beschrieben oder eines Verbundelements wie zuvor beschrieben als Wärmedämmmaterial.

Die nachfolgenden Beispiele dienen der Veranschaulichung der Erfindung, sind aber in keiner Weise einschränkend hinsichtlich des Gegenstands der vorliegenden Erfindung.

### Beispiele

### 1. Herstellbeispiel

Es wurde folgende Folie eingesetzt:
Folie V08621 von Hanita Coatings RCA Ltd:
Drei Lagen aus metallisiertem Polyesterfilm mit einer Siegelschicht aus LLDPE

### 1.1 Beispiel 1: Herstellung eines Xerogels

Es wurden folgende Verbindungen eingesetzt:

### Komponenten:

- Oligomeres MDI (Lupranat® M50) mit einem NCO-Gehalt von 31,5 g pro 100 g nach ASTM D-5155-96 A, einer Funktionalität im Bereich von 2,8 bis 2,9 und einer Viskosität von 550 mPa.s bei 25 °C nach DIN 53018 (nachfolgend "Verbindung M50").
- 3,3',5,5'-Tetraethyl-4,4'-diaminodiphenylmethan (nachfolgend "MDEA")

| | |
|---|---|
| Katalysator: | Dimethylpiperazin |

56 g der Verbindung M50 wurden unter Rühren bei 20 °C in 210 g Aceton in einem Becherglas gelöst. 8 g der Verbindung MDEA, 1 g Dimethylpiperazin und 2 g Wasser wurden in 210 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Anschließend wurde das Gel aus dem Becherglas genommen und die Flüssigkeit (Aceton) durch 7 Tage langes Trocknen bei 20 °C entfernt.

Das erhaltene Xerogel wies eine Druckfestigkeit von 0,202 N/mm² bei einer Dichte von 117 kg/m³ auf.

Die Wärmeleitfähigkeit betrug 5,5 mW/m*K bei einem angelegten Druck beim Verschweißen der Folie (Hanita V08621) von 3,6 ^{∗} 10-4 mbar.

### 1.2 Beispiel 2: Herstellung eines offenzelligen Polyurethanhartschaums

Es wurden folgende Verbindungen eingesetzt:
- Polyol A: Polyetheralkohol aus Saccharose, Glycerin und Propylenoxid, Hydroxylzahl 490
- Polyol B: Polyetheralkohol aus Propylenglykol und Propylenoxid, Hydroxylzahl 105
- Polyol C: Polyetheralkohol aus Propylenglykol und Propylenoxid, Hydroxylzahl 250
- Zusatzmittel 1: Tegostab® B 8870 (Silikonstabilisator von Evonik)
- Zusatzmittel 2: Ortegol® 501 (Zellöffner von Evonik)
- Katalysator 1: Polycat® 58 (Air Products)
- Katalysator 2: Kamliumacetat in Ethylenglykol (BASF)
- Isocyanat: Polymer-MDI (Lupranat® M70, BASF)

Aus den angegebenen Rohstoffen wurde eine Polyolkomponente hergestellt und mit dem Isocyanat umgesetzt. Die Mengen der verwendeten Einsatzstoffe finden sich in Tabelle 1. Die Vermischung erfolgte in einem Mischkopf. Die Reaktionsmischung wurde in einen Laborform mit den Seitenlängen 418^{∗}700^{∗}455 mm ausgetragen und dort aushärten gelassen.

**Tabelle 1: eingesetzte Mengen der Einsatzstoffe**

| Komponente | Gewichtsteile |
|---|---|
| Polyol A | 44,10 |
| Polyol B | 44,10 |
| Polyol C | 9,15 |
| Wasser | 0,55 |
| Stabilisator | 0,90 |
| Katalysator 1 | 0,50 |
| Katalysator 2 | 0,70 |
| Zellöffner | 1,80 |
| Cyclopentan | 9,50 |
| Isocyanat | 194 |
| | |
| Kennzahl | 244 |

Aus den Hartschaumblöcken wurden Prüfkörper der Größe 19^{∗}19^{∗}2cm herausgesägt, in eine gasdichte Folie (Hanita V08621) verpackt und diese nach dem Evakuieren auf Drücke kleiner 0,1 mbar verschweißt.

Die Wärmeleitfähigkeit betrug 7,7 mW/m*K bei einem angelegten Druck beim Verschweißen der Folie (Hanita V08621) von 3,5 ^{∗} 10-4 mbar.

### 1.3 Beispiel 3: Herstellung eines Aerogels

Es wurden folgende Verbindungen eingesetzt:

### Komponenten:

Oligomeres MDI (Lupranat® M200) mit einem NCO-Gehalt von 30,9 g pro 100 g nach ASTM D-5155-96 A, einer Funktionalität im Bereich von drei und einer Viskosität von 2100 mPa.s bei 25°C nach DIN 53018 (nachfolgend "Verbindung M200").
- 3,3',5,5'-Tetramethyl-4,4'-diaminodiphenylmethan (nachfolgend "MDMA")

| | |
|---|---|
| Katalysator: | Dabco K15 (Kaliumethylhexanoat gelöst in Diethylenglykol (85%)) |

48 g der Verbindung M200 wurden unter Rühren bei 20°C in 210 g Aceton in einem Becherglas gelöst. 12 g der Verbindung MDMA, 2 g Dabco K15 und 4 g Wasser wurden in 210 g Aceton in einem zweiten Becherglas gelöst. Die beiden Lösungen aus Schritt (a) wurden gemischt. Man erhielt eine klare, niedrigviskose Mischung. Die Mischung wurde bei Raumtemperatur 24 Stunden zur Aushärtung stehen gelassen. Der Gel-Monolith wurde aus dem Becherglas entnommen und in einen 250 ml Autoklaven transferiert und anschließend verschlossen. Der Monolith wurde für 24h im CO₂ Strom getrocknet. Der Druck (im Trocknungssystem) betrug zwischen 115 - 120 bar; die Temperatur betrug 40°C. Am Ende wurde der Druck im System innerhalb von ca. 45 Minuten bei einer Temperatur von 40°C kontrolliert auf Atmosphärendruck verringert. Der Autoklav wurde geöffnet und der getrocknete Monolith wurde entnommen.

Die Wärmeleitfähigkeit des so erhaltenen Aerogels betrug 17,5 mW/m*K bei 10°C.

### 2. Versuche zur Haftung Kern/Folie

Die Versiegelung/Verbindung der Folie (Hanita V08621) mit dem Kern erfolgte nach Wärmebehandlung der Folie mit einer Presse. Die Pressparameter betrugen 125 °C Heizplattentemperatur, 3 Minuten Presszeit und 2 bar Pressdruck.

Die versiegelten Proben wurden für 24h bei Normklima (23 °C, 50% LF) gelagert.

Der Abzugsversuch der aufgeschweißten Folie auf den Kern erfolgte in Anlehnung an DIN EN ISO 527-1 und ergab eine maximale Abzugskraft von:

### Beispiel 1: 130N

### Beispiel 2: 249N

Das Beispiel zeigt, dass die Haftung zwischen Kernmaterial und Siegelschicht dazu führt, dass eine Kraft aufgewendet werden muss, um diesen Verbund zu destabilisieren. Demgemäß weisen die erfindungsgemäßen Verbundelemente eine verbesserte Stabilität auf.

## Patentansprüche

1. Verfahren zur Herstellung eines Verbundelements enthaltend einen ein- oder mehrteiligen Kern und eine Umhüllung, die kraftschlüssig miteinander verbunden sind, mindestens umfassend die folgenden Schritte:
(i) Bereitstellen eines ein- oder mehrteiligen Kerns aus einem evakuierbaren organischen Material;
(ii) zumindest teilweises Umhüllen des Kerns mit einer Umhüllung unter Erhalt eines Verbundelement-Vorläufers, wobei die am Kern anliegende Oberfläche der Umhüllung aus einem thermoplastischen Material besteht;
(iii) Behandeln des Verbundelement-Vorläufers für eine Dauer, die zu einem zumindest teilweisen Erweichen des evakuierbaren organischen Materials und der am Kern anliegenden Oberfläche der Umhüllung führt,
wobei die kraftschlüssige Verbindung der Umhüllung mit dem Kern analog zu DIN EN ISO 5271 gemessen wird, und wobei die am Kern anliegende Oberfläche der Umhüllung des Verbundelements in direktem Kontakt mit dem evakuierbaren organischen Material ist und an dem evakuierbaren organischen Material des Kerns mit einer Kraft im Bereich von 100 bis 300 N, bestimmt analog zu DIN EN ISO 5271, anhaftet.

2. Verfahren gemäß Anspruch 1, wobei die Behandlung eine Wärmebehandlung mittels Aufheizen, Infrarot oder Ultraschall umfasst.

3. Verfahren gemäß einem der Ansprüche 1 oder 2, wobei die Behandlung gemäß Schritt (iii) eine Wärmebehandlung und das Anpressen der Umhüllung an den Kern umfasst.

4. Verfahren gemäß einem der Ansprüche 1 bis 3, wobei das Verfahren nach Schritt (ii) und vor Schritt (iii) die Schritte (a) und (b) umfasst:
(a) Evakuieren des Verbundelement-Vorläufers;
(b) Verschließen der Umhüllung unter Erhalt eines evakuierten Verbundelement-Vorläufers.

5. Verfahren gemäß einem der Ansprüche 1 bis 4, wobei die Behandlung für eine Dauer im Bereich von 2 Sekunden bis 30 Minuten ausgeführt wird.

6. Verfahren gemäß einem der Ansprüche 1 bis 5, wobei der ein- oder mehrteilige Kern plattenförmig ausgestaltet ist.

7. Verfahren gemäß einem der Ansprüche 1 bis 6, wobei das evakuierbare organische Material ausgewählt ist aus der Gruppe bestehend aus organischen Aerogelen, organischen Xerogelen und organischen Hartschäumen.

8. Verfahren gemäß einem der Ansprüche 1 bis 7, wobei die Umhüllung einen mehrschichtigen Aufbau hat.

9. Verfahren gemäß einem der Ansprüche 1 bis 8, wobei die am Kern anliegende Oberfläche der Umhüllung aus einem thermoplastischen Material ausgewählt aus der Gruppe bestehend aus Polyethylen und Polypropylen besteht.

10. Verfahren gemäß einem der Ansprüche 1 bis 9, wobei die Umhüllung diffusionsdicht ist.

11. Verfahren gemäß einem der Ansprüche 1 bis 10, wobei die Umhüllung eine Gasdurchlässigkeit von weniger als 1 cm³/(m²d), bestimmt gemäß DIN 53380, aufweist.

12. Verfahren gemäß einem der Ansprüche 1 bis 11, wobei die Umhüllung eine Wasserdampfdurchlässigkeit von weniger als 1 g/(m²d), bestimmt gemäß DIN 53380, aufweist.

## Claims

1. A method for manufacturing a composite element comprising a single- or multi-part core and an envelope which are in a force fit combination with each other, at least comprising the steps of:
(i) providing a single- or multi-part core of an evacuable organic material;
(ii) at least partly enveloping the core with an envelope to obtain a composite element precursor wherein the envelope surface apposing the core consists of a thermoplastic material;
(iii) treating the composite element precursor for a period leading to an at least partial softening of the evacuable organic material and of the envelope surface apposing the core,
wherein the force fit combination of the envelope with the core is measured similarly to DIN EN ISO 5271, and wherein the envelope surface of the composite element apposing the core is in direct contact with the evacuable organic material and adheres to the evacuable organic material of the core with a force ranging from 100 to 300 N, determined similarly to DIN EN ISO 5271.

2. The method according to claim 1 wherein the treatment comprises a heat treatment via heating, infrared or ultrasound.

3. The method according to either of claims 1 and 2 wherein the treatment as per step (iii) comprises a heat treatment and pressing the envelope against the core.

4. The method according to any one of claims 1 to 3 wherein the method after step (ii) and before step (iii) comprises steps (a) and (b):
(a) evacuating the composite element precursor;
(b) closing the envelope to obtain an evacuated composite element precursor.

5. The method according to any one of claims 1 to 4 wherein the treatment is carried out for a period in the range from 2 seconds to 30 minutes.

6. The method according to any one of claims 1 to 5 wherein the single- or multi-part core has a plate-shaped configuration.

7. The method according to any one of claims 1 to 6 wherein the evacuable organic material is selected from the group consisting of organic aerogels, organic xerogels and rigid organic foams.

8. The method according to any one of claims 1 to 7 wherein the envelope has a multilayered construction.

9. The method according to any one of claims 1 to 8 wherein the envelope surface apposing the core consists of a thermoplastic material selected from the group consisting of polyethylene and polypropylene.

10. The method according to any one of claims 1 to 9 wherein the envelope is diffusiontight.

11. The method according to any one of claims 1 to 10 wherein the envelope has a DIN 53380 gas permeability of less than 1 cm³/(m²d).

12. The method according to any one of claims 1 to 11 wherein the envelope has a DIN 53380 water vapor permeability of less than 1 g/(m²d).

## Revendications

1. Procédé de préparation d'un élément composite contenant un noyau en une ou plusieurs parties et une enveloppe, qui sont reliés entre eux par adhérence, comprenant au moins les étapes suivantes :
(i) mise à disposition d'un noyau en une ou plusieurs parties composé d'un matériau organique pouvant être mis sous vide ;
(ii) enveloppement au moins partiel du noyau par une enveloppe avec obtention d'un précurseur d'élément composite, la surface de l'enveloppe accolée au noyau étant constituée d'un matériau thermoplastique ;
(iii) traitement du précurseur d'élément composite pendant une durée, qui conduit à un ramollissement au moins partiel du matériau organique pouvant être mis sous vide et de la surface de l'enveloppe accolée au noyau,
la liaison par adhérence de l'enveloppe avec le noyau étant mesurée de manière analogue à la norme DIN EN ISO 5271, et la surface de l'enveloppe de l'élément composite accolée au noyau étant en contact direct avec le matériau organique pouvant être mis sous vide et adhérant au matériau organique pouvant être mis sous vide du noyau avec une force dans la plage de 100 à 300 N, déterminée de manière analogue à la norme DIN EN ISO 5271.

2. Procédé selon la revendication 1, le traitement étant un traitement thermique par chauffage, par des infrarouges ou par ultrasons.

3. Procédé selon l'une quelconque des revendications 1 ou 2, le traitement selon l'étape (iii) étant un traitement thermique et comprenant le pressage de l'enveloppe sur le noyau.

4. Procédé selon l'une quelconque des revendications 1 à 3, le procédé comprenant après l'étape (ii) et avant l'étape (iii) les étapes (a) et (b) :
(a) mise sous vide du précurseur d'élément composite ;
(b) fermeture de l'enveloppe avec obtention d'un précurseur d'élément composite mis sous vide.

5. Procédé selon l'une quelconque des revendications 1 à 4, le traitement étant mis en œuvre pendant une durée dans la plage de 2 secondes à 30 minutes.

6. Procédé selon l'une quelconque des revendications 1 à 5, le noyau en une ou plusieurs parties étant conçu en forme de plaque.

7. Procédé selon l'une quelconque des revendications 1 à 6, le matériau organique pouvant être mis sous vide étant choisi dans le groupe constitué par les aérogels organiques, les xérogels organiques et les mousses dures organiques.

8. Procédé selon l'une quelconque des revendications 1 à 7, l'enveloppe possédant une structure en plusieurs couches.

9. Procédé selon l'une quelconque des revendications 1 à 8, la surface de l'enveloppe accolée au noyau étant constituée d'un matériau thermoplastique choisi dans le groupe constitué par le polyéthylène et le polypropylène.

10. Procédé selon l'une quelconque des revendications 1 à 9, l'enveloppe étant étanche à la diffusion.

11. Procédé selon l'une quelconque des revendications 1 à 10, l'enveloppe présentant une perméabilité au gaz inférieure à 1 cm³/(m²d), déterminée selon la norme DIN 53380.

12. Procédé selon l'une quelconque des revendications 1 à 11, l'enveloppe présentant une perméabilité à la vapeur d'eau inférieure à 1 g/(m²d), déterminée selon la norme DIN 53380.
